# EUROPEAN PATENT APPLICATION

(11) **EP 1 939 310 A1**
(43) Date of publication of application: **02.07.2008**
(21) Application number: 06026972.7
(22) Date of filing: 28.12.2006
(51) Int. Cl.: C22B 19/02, C22B 19/20, C22B 3/08

(54) **Recovery of zinc from sulphide concentrates by atmospheric leaching with sulphuric acid at a controlled acidity**

(71) Applicant: ASTURIANA DE ZINC, S.A., 33417 - Castrillon, Asturias (ES)
(72) Inventor: Covadonga, Muruzabal Sitges M., 33405 Salinas, Asturias (ES); Hourn, Michael Matthew, Bulimba Queensland 4171 (AU)
(74) Representative: Carvajal y Urquijo, Isabel

(57) **Abstract**

The invention relates to a process for recovering zinc that comprise the steps of: flotation of zinc sulphide concentrates, milling of zinc sulphide concentrates, atmospheric leaching of zinc sulphide concentrates and purification of the solution obtained in the previous step. The leaching step is carried out in the presence of ferric ions and copper ions, and the acidity of the sulfuric acid leachant is controlled involving low concentration values in a range of preferably 5 to 20 g/l.

## Description

### FIELD OF THE INVENTION

The present invention relates to a process for leaching zinc from sulphide concentrates and in particular is directed towards a process of recovering zinc within a hydrometallurgical zinc process.

### BACKGROUND ART

Zinc is generally extracted from zinc concentrates by oxidation of the concentrate in a roaster at temperatures in excess of 800°C. The roasted concentrate, commonly referred to as calcine, is then leached in sulphuric acid solution to recover the zinc to solution. The zinc rich solution is then purified by the addition of zinc dust and other reagents. Zinc is recovered from the purified solution by electrolysis, to form zinc metal. This process is widely used to produce zinc and is described, among other specifications, in Norwegian Patent No 108 047.

The roasting process requires concentrate of a specific quality. The concentrate should be low in iron, copper, silica and lead. In addition, the concentrate must contain sufficient sulphur to meet the fuel requirements of the roasting step. In order to produce concentrate of sufficient quality for roasting, the recovery of zinc from ore to concentrate is often less than 80 %. Further, there are zinc ores that contain relatively high levels of iron, copper, silica and lead and a concentrate cannot be produced from these ores that is suitable for roasting.

In order to extract zinc from these lower grade or impure concentrates, hydrometallurgical techniques are employed, where the concentrate is oxidized by oxygen in a solution of sulphuric acid. One such process is the Sherritt process which includes the steps of feed preparation, pressure oxidation in the presence of acid and oxygen, solid/liquid separation, liquid neutralization and zinc recovery from the neutralized liquid. The operating conditions required in this process are at temperatures of between about 140°C to 160°C, a total pressure of 1500 kPa, an acid concentration of 100 - 150 g/L and a retention time of two to three hours. The oxidation must be carried out in an autoclave and requires a source of pure oxygen.

The capital costs associated with providing the autoclaves and meeting the high oxygen demand for the concentrate is high. The high capital costs make this technology too expensive to apply for medium to small scale operations and for low grade ore.

Attempts have been made to reduce the aggressive conditions and to lower the pressures and temperatures required whilst maintaining the economic viability of zinc leaching processes. Australian patent application no. 27182/92 describes subjecting a concentrate to fine grinding prior to leaching. Fine grinding to an 80% passing size of 15 micron or less enables the leaching of sulphide concentrates to be carried out under less aggressive conditions at temperatures of 95-110°C and pressures of about 1000 kPa.

While this reduction in pressure will decrease the capital costs of the leach and allow the feed to be processed in a single stage, the cost is still prohibitive for small or medium scale operations, as a pressurized leach vessel is still required.

It is also known to oxidatively leach sulphide mineral species with ferric ions under acidic conditions. This process allows the leaching reaction to occur without the need for pressurization of the leach reactors. This results in a substantial saving in capital cost for the leach stage. US Patents 5 858 315 and World Patent WO 98/06879 describe processes that combine atmospheric ferric leaching with conventional roasting technology to produce a hybrid flowsheet, where some of the feed can be processed at lower cost. These are multistage processes however, and do not allow all of the feed to be processed in a single leaching step.

WO 98/06879 describes a process where zinc concentrate is leached with sulphuric acid at temperatures in the range 80 degrees Celsius up to the boiling point of the solution, in the presence of jarosite nuclei. The addition of jarosite to the leaching step is essential to the success of this process and so it is only applicable where jarosite is available or produced elsewhere in the process for return to the leaching stage.

Australian Patent AU96/00157 describes subjecting a concentrate to fine grinding to a size of 80 % passing 25 microns or finer prior to leaching. Ferric ions are used in the leaching system, and this enables the leaching of sulphide concentrates to be carried out under less aggressive conditions at temperatures of 85 - 95°C and at atmospheric pressure.

Ferric ion is typically a more effective oxidizing agent than oxygen which means that oxidation with ferric ions can be carried out under less aggressive conditions. A disadvantage of leaching with ferric ions is that the ferric ions are reduced to ferrous ions during the leaching reaction, therefore, ferric ions must be regenerated by oxidizing the reduced ferrous ions. This is most commonly achieved by the injection of oxygen into the leach solution, in the form of oxygen gas or air.

Further, the rate of regeneration of ferric iron is very dependent on the level of acidity in the leach solution. At acid levels in excess of 20 g/I, the rate of regeneration of ferric iron is very low, and is not sufficient to sustain the teaching system. Sulphuric acid is needed to leach zinc concentrates, and zinc leaching circuits typically use spent electrolyte from the electrolysis stage to supply this acid. The acid level in this spent electrolyte is in the range 140 - 180 g/l, and is too high for the regeneration of ferric iron at acceptable rates.

Ferric leaching of zinc concentrates, therefore, is made difficult by the high acid levels in zinc leach solutions.

The present invention is based on the concept that zinc concentrates can be leached in a ferric leach with careful control of the leach pH and the level of copper in the leach solution. Copper is present in zinc concentrates as naturally occurring copper minerals, and as copper reagents added to the concentration circuit to help prepare the concentrate. In the current invention, when copper is recovered to the leach solution, will act as a catalyst and improve the rate of regeneration of ferric iron. Moreover the presence of copper allows the ferric leach to work at much lower levels of iron than are commonly employed in other ferric leach processes and, at the same time, at lower acidities that facilitates the oxidation of Fe(II) to Fe(III). In the present invention, the ferric leach has been operated at total iron levels in solution of less than 5 g/I and the acidity below 10 g/I.

In the present invention, it is the careful addition of spent electrolyte from the electrolysis stage to the leach at a controlled pH level that allows the assisted regeneration of ferric iron by soluble copper.

According to the broad form of the invention there is provided a process of processing a zinc sulphide concentrate, the process comprising milling the zinc concentrate to a particle size of P₈₀ of less than 25 microns and leaching said concentrate with a solution comprising ferric and ferrous iron, copper and sulphuric acid. The copper is supplied by the concentrate or by the addition of this element as a reagent. The ferric and ferrous iron are all supplied by the concentrate with no requirement for addition of these elements as a reagent. Further, the acid level in the leach solution is maintained in the range 5-20 g/l by the continual addition of spent electrolyte from the electrolysis step but preferably between 5 and 10 g/I. The continual addition of spent electrolyte provides the acid required to leach the zinc concentrate. The rate of regeneration of ferric iron achieved at this acid level is sufficient to leach the required amount of zinc within 24 hours.

The process of the present invention is applicable to a zinc sulphide concentrate with a broad range of zinc levels, ranging up to 15 to 65 % w/w zinc. Further, the present invention is applicable to zinc concentrates that may contain high levels of impurity elements, such as copper, iron, lead, silica and others that cannot be processed in the more conventional roasting plants.

The process of the present invention is in particular directed towards the treatment of refractory materials containing zinc. Suitably, the refractory materials are in the form of flotation concentrates although the process is suitable for ores if the economics are favourable. The zinc may be present as sulphides or oxides, and may be present in combination with other elements, such as iron in zinc ferrites.

In the process of the present invention, the concentrate is finely ground to a particle size of 80 % by mass passing less than 25µm. A typical particle size range is between 80 % passing 2-35µm, preferably between about 80 % passing 10-35µm and more preferably between 15 to 25 µm.

A preferred apparatus for producing the finely ground material is a stirred ball mill. However, it will be appreciated that several other suitable types of comminution apparatus may also be used.

The leaching is carried out in agitated tanks at atmospheric pressure. Spent electrolyte from the electrolysis step is added to each tank in the leach to control the acid level within the range 5 - 20 g/I, with a preferred range of 5 - 10 g/I.

In the present invention, leaching of all forms of zinc in the feed to the leaching stage occurs in a single stage of leaching, at low levels of acid. In this way the present inventions differs from US Patent 5 858 315 and World Patent WO 98/06879, where the zinc feed material is split and is processed using a variety of different methods, such as roasting and leaching.

In the present invention, the steps of fine grinding and leaching occur in series, and are not combined in a single step as specified in US patent 6 835 230. This will reduce the cost of the fine grinding stage, as it will not need to be designed to operate under acidic conditions.

Oxygen is required to re-oxidize the ferric iron in the leaching step. The reaction for oxidation of the ferric iron is: 2FeSO₄ + 1/2O₂ + H₂SO₄ → Fe₂(SO₄)₃ + H₂O

The presence of copper in the leach solution significantly increases the rate at which this reaction occurs, while not directly being consumed in the reaction. Copper is supplied from naturally occurring copper minerals in the flotation concentrate, and from copper sulphate, that is commonly used in the preparation of zinc flotation concentrates and adsorbed onto the concentrate surface.

The ferric iron then leaches the zinc sulphide minerals in a reaction of the form: ZnS + Fe₂(SO₄)₃ → ZnSO₄ + 2FeSO₄ + S°

The ferrous iron is then re-oxidised according to the reaction above. The rate of this reaction is decreased by the presence of acid in the leach solution, and so the level of acid is kept low by the careful control of the pH in the leach tanks. At the preferred range of pH, the acid level in the leach tanks should not exceed 20 g/l. The level of iron in solution will be in the range 1-10 g/l. In this way the present invention differs from that specified in US Patent 5120353, where the acidity is initially maintained at levels of up to 90 g/L, specifically to prevent the formation of ferric iron.

In the present invention, the residence time in the leach tanks is adjusted to ensure that there is in excess of 500 ppm copper present in all leach tanks. In the leaching of zinc concentrates copper, will not report to the leach solution until the majority of the zinc is leached, as zinc sulphide will continually precipitate copper from solution. In order to overcome this, the leaching process is configured so that over 90% of the zinc is leached from the concentrate during the first stage of the leach and the level of copper in the solution remains at the required level. In this present invention the feed to the leach tanks is split equally to several tanks, instead of the conventional method of a single feed to the first tank in the circuit and from there to the next tank and from there to the next tank and so on. The simultaneous feed method to several tanks achieves the required level of zinc leaching in each tank due to the longer residence time.

The process of the present invention can be carried out at atmospheric pressure. This avoids the use of expensive pressure reactors and autoclave equipment. The preferred operating temperature is between about 50°C up to the boiling point of the mixture. Typically the maximum temperature is about 105°C.

The leaching reaction can thus be carried out in open tank reactors. Excess heat is removed by evaporation of the solution. This avoids the need for costly heat exchangers. Heat can be easily introduced by known methods such as the injection of steam.

The leaching reaction is carried out in the presence of an oxygen containing gas. When the reaction is carried out in an open tank reactor the gas is typically introduced by sparging. The gas may be oxygen, air or oxygen enriched air. The gas flow is dependent upon the amount of oxygen required to sustain the leaching reaction.

After the concentrate has been leached, the mixture can be further treated by known methods to recover zinc metal, principally by zinc dust purification and electrolysis.

### BRIEF DESCRIPTION OF THE DRAWINGS

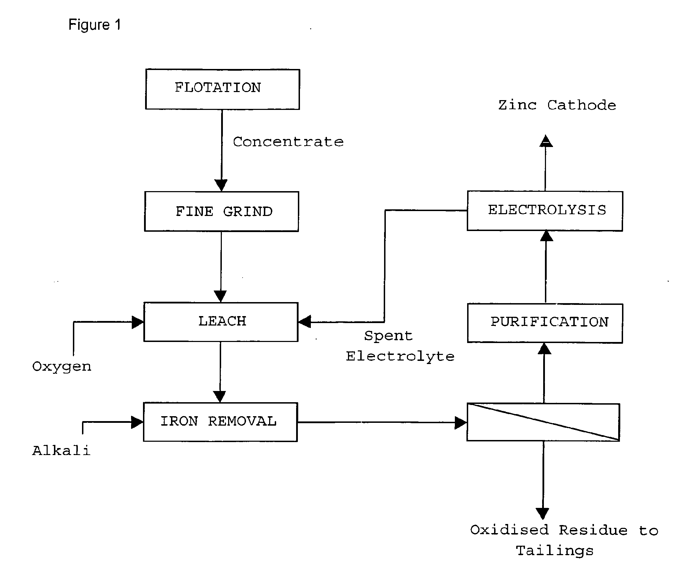

Figure 1 is a flow diagram of a preferred process of the present invention. In this process, excess iron and acid released from the zinc concentrate during leaching is precipitated by the addition of an external alkali to the leach discharge. This process of the invention would be applied when the leaching plant is built as a stand alone operation.

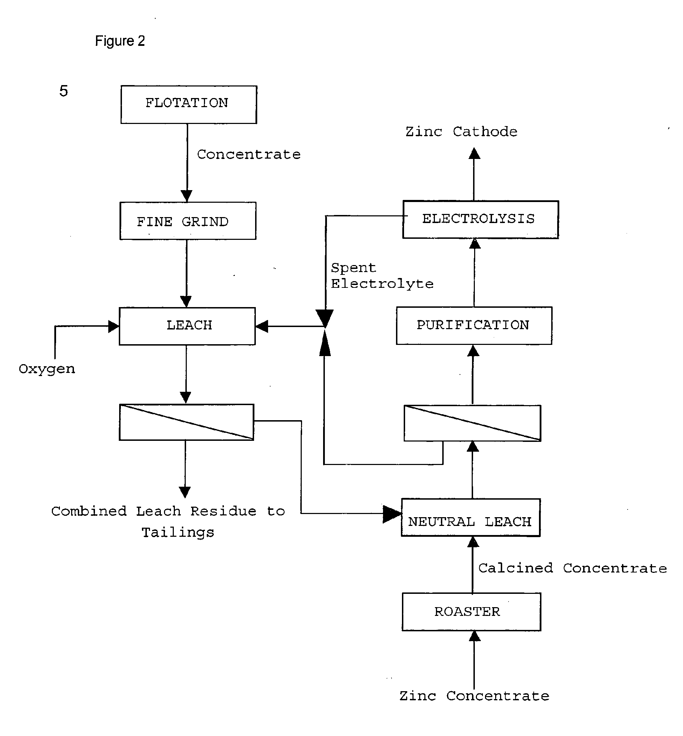

Figure 2 is a flow diagram of a second preferred process of the present invention. In this process, excess iron and acid released from the zinc concentrate leaching stage are respectively precipitated and neutralized by calcined zinc concentrate in a conventional neutral leaching stage. This process of the invention would be applied when the leaching plant is built as an expansion or addition to a conventional roast-leach electrowinning zinc production plant. In this process of the invention the discharge of the residues from the zinc leaching plant would be processed through the new acid leaching stage adjacent to the conventional zinc production plant.

### BEST MODE

The present invention will now be described in relation to the following example. However, it will be appreciated that the generality of the invention as described above is not limited to the following example.

### Example No. 1. Leach of a zinc sulphide concentrate in spent electrolyte from electrolysis with gaseous oxygen used as the oxidant.

The concentrate sample was supplied by an operating mine. The concentrate sample had been ground in a horizontally stirred bead mill at the mine site. The media used was 1 - 3 mm river sand. The final particle size distribution for the ground concentrate was determined by lasersizer and is presented below:

**Concentrate Particle Size Distribution**

| % passing | Size - microns |
|---|---|
| 99 | 22.78 |
| 95 | 15.86 |
| 90 | 12.44 |
| 80 | 8.83 |
| 50 | 3.89 |
| 40 | 2.93 |
| 30 | 2.12 |
| 20 | 1.4 |
| 10 | 0.81 |

Finely ground concentrate was transported from the mine for the leaching testwork. Concentrate slurry was fed directly into the leach circuit through a variable speed hose pump at a rate of 294 kg/day. The leach circuit was configured with two agitated tanks operating in parallel, with both leach tanks overflowing into a third leach tank. The overall residence time in the leach circuit was 20 - 24 hours, with a residence time of 16 - 20 hours in the parallel stage of the leach. The residence time in the parallel leach stage was a critical variable in the optimization of the leach. The majority of the copper present in the concentrate only leached into solution once the zinc recovery had exceeded 90 %. In order to achieve sufficient copper in solution to catalyse ferric leaching, the residence time in the parallel leach tanks needed to be sufficient to achieve a zinc recovery slightly in excess of 90 % w/w.

Concentrate slurry was fed to a pneumatic splitter located above the central point of the two leach tanks through a variable speed hose pump. Slurry was evenly split between the two tanks by a timer that actuated the pneumatic splitter. The slurry entered the leach vessels at the top of the tank through a downcomer.

Spent Electrolyte was pumped into a ring main that returned to a Spent Electrolyte Storage tank. Two off takes from the ring main directed electrolyte to into each of the parallel tanks at a controlled flowrate using separate magnetic flowmeters and pneumatically actuated flow control valves. The flowrate was adjusted as required to maintain the acid level in the parallel leach tanks within the range 5 - 10 g/I and also to provide a residence time in the combined leach circuit of 20 - 24 hours. The spent electrolyte contained 50 - 55 g/I zinc and 160 - 170 g/l sulphuric acid. The optimum pH in the parallel leach tanks was in the range 1.2 - 1.6.

The slurry density in the leach circuit was adjusted to provide a final zinc tenor in leach discharge of 120 - 140 g/l.

The two parallel leach tanks had a live volume of 1750 litres. Each tank was manufactured from stainless steel, with a butyl rubber lining. The final tank had a live volume of 300 litres, and was also manufactured from stainless steel, with a butyl rubber lining. All leach tanks were agitated by centrally mounted hydrofoil type impellers and were fitted with four 110 mm baffles, which were located equidistant around the tank perimeter. All slurry flows between the leach tanks were via overflow lines.

Oxygen was added to the leach tanks via a high pressure sparger. The oxygen supply was sourced from bottled oxygen installed on site.

The temperature in the leach tanks was maintained at the desired setpoint by injection of live steam into the slurry. The temperature profile in the leach was maintained according to a profile calculated based on the predicted leach heat balance.

The analysis of the zinc concentrate sample is presented below:

**Zinc Concentrate Analysis**

| Component | Analysis - % w/w |
|---|---|
| Zn | 43.2 |
| Al₂O₃ | 1.17 |
| Si | 5.42 |
| Pb | 11.1 |
| Fe | 3.31 |
| Cu | 1.05 |
| Cr | 0.021 |
| Cd | 0.09 |
| Co | 0.004 |
| Ni | 0.024 |
| As | 0.042 |
| Sb | 0.016 |
| Cl | 0.08 |
| F | 0.04 |

The operating performance of the leach circuit is presented below:

| | |
|---|---|
| Operating Period | 36 Days |
| Mimimum zinc recovery in total circuit - | 97.5 % w/w |
| Average zinc recovery - Parallel leach circuit | 91.3 % w/w |
| Average zinc level in tailings from parallel leach circuit | 4.3 % w/w |
| Control pH - parallel stage | 1.2 - 1.6 |
| Copper tenor - parallel stage | 1.5 - 1.8 g/I |
| Iron tenor - parallel stage | 3.1 - 4.1 g/l |
| Ferric tenor - parallel stage | 1 - 1.5 g/I |
| Acid tenor - parallel stage | 12 - 18 g/l |
| Average zinc leach rate | 3.8 - 4.1 g/l/hr |

A zinc recovery in excess of 97.5 % was achieved from the zinc concentrate over a 24 day period of continuous operation in the leaching circuit. This was achieved by maintaining the pH in the parallel stage of the leach at 1.2 - 1.6. At this pH level, the average rate of regeneration of ferric iron in the leach was 2.5 g/lh. The average copper tenor in the parallel stage of the leach was 1.8 g/l, with a range of 1.5 - 2 g/l. The average iron tenor in the parallel stage of the leach was 3350 ppm, with a range of 3100 - 4100 ppm.

The zinc recovery in the parallel stage of the leach averaged 91 % w/w, with the zinc tail assay averaging 4.3 % w/w zinc. At this level of leaching, there was sufficient copper in the leach solution to maintain the rate of ferric oxidation, despite the relatively low levels of iron present in the leach solution.

## Claims

1. A process for recovering zinc **characterized** for comprising the next steps:
a. flotation of zinc sulphide concentrates;
b. milling of zinc sulphide concentrates;
c. atmospheric leaching of zinc sulphide concentrates; and
d. purification of the solution obtained in the previous step.

2. A process according claim 1 **characterized** for zinc sulphide concentrates contains zinc as zinc sulphides and/or zinc ferrites forms.

3. A process according to anyone of previous claims **characterized** for leaching step is realized with a solution comprising ferric and ferrous iron, copper and sulphuric acid.

4. A process according to claim 3, **characterized** for the acid level in the leach solution is maintained in the range 5 - 20 g/l, but preferably between 5 and 10 g/l.

5. A process according to claim 3, **characterized** for copper is provided by concentrates and/or the addition of copper as reagent.

6. A process according to anyone of previous claims, **characterized** for zinc concentrates contains zinc in the range 15 - 65 % w/w, with iron levels in the range of 0.5 to 20 % w/w and lead levels in the range of 0.5 to 35 % w/w.

7. A process according to anyone of previous claims, **characterized** for leaching is realized at atmospheric pressure.

8. A process according to anyone of previous claims, **characterized** for leaching is realized in the range of 50 to 105°C of temperature, preferably in the range of 80 to 90°C.

9. A process according to claim 3, **characterized** for copper level in leaching solution is at least 200 pppm or more.

10. A process according to claim 1, **characterized** for leaching reaction is carried out in the presence of an oxygen, air or oxygen enriched air.

11. A process according to claim 3, **characterized** for iron is in a concentration in the range of 1 to 10 g/I iron.
